Europäisches Patentamt

European Patent Office

Office européen des brevets

(11) Publication number: **0 086 755**
**A2**

## (12) EUROPEAN PATENT APPLICATION

(21) Application number: 83830027.5

(22) Date of filing: 08.02.83

(51) Int. Cl.³: **A 21 C 1/06**

(30) Priority: **12.02.82 IT 6716982**

(43) Date of publication of application: **24.08.83**
**Bulletin 83/34**

(84) Designated Contracting States: **AT BE DE FR GB NL**

(71) Applicant: SANCASSIANO S.p.A., Via C. Cavallotto 8,
I-12060 Roddi d'Alba (Cuneo) (IT)

(72) Inventor: Drocco, Amabile, Strada Castelgherlone 34,
I-12051 Alba (Cuneo) (IT)

(74) Representative: Notaro, Giancarlo et al, c/o
Jacobacci-Casetta & Perani S.p.A. Via Alfieri, 17,
I-10121 Torino (IT)

### (54) Kneading machine.

(57) The invention relates to improvements in kneading machines of the type including a fixed support structure (2), a kneading vessel (3) which is circular in plan and is supported for rotation about a central vertical axis (X-X) by the fixed support structure (2), a kneading tool (4) mounted for rotation about a radial horizontal axis within the kneading vessel, and fixed counter members arranged to cooperate with the kneading tool. The main characteristic of the machine according to the invention lies in the fact that the side wall (3a) of the vessel (3), or at least the part (A, B) which cooperates with the kneading tool (4), has, in vertical section, a profile in the form of an arc of a circle with a radius (R) equal to that radius of the vessel which lies in a horizontal plane containing the axis (Y-Y) of the kneading tool, and in that the kneading tool includes at least one arm (6) having a curved end portion (7) located parallel to and adjacent the wall of the vessel.

- 1 -

## Kneading Machine

The present invention relates to a kneading machine including:

a fixed support structure;

a kneading vessel which is circular in plan and is supported for rotation about a central vertical axis by the fixed support structure;

a kneading tool mounted for rotation about a horizontal radial axis within the kneading vessel, and

fixed counter members arranged to cooperate with the kneading tool.

A kneading machine of the type described above, which is particularly useful for flour doughs, is described and illustrated in European patent application No. 81830214.3(0 052 582) filed by the same applicants.

The object of the present invention is to improve the machine proposed previously so as to achieve a reduction in the kneading time , better mixing of the ingredients of the dough,and greater homogeneity of the kneaded mass.

The main characteristic of the kneading machine forming the subject of the present invention lies in the fact that the side wall of the kneading vessel, or at least the part which cooperates with the kneading tool, has, in vertical section,a profile in the form of an arc of a circle with a radius equal to that radius of the vessel which lies in a horizontal plane containing the axis of the kneading tool,and in that the kneading tool includes at least one arm having a curved end portion located parallel to and adjacent the wall of the vessel.

By virtue of this characteristic, during the rotation of the kneading tool, the end portion thereof, which is arcuate in shape, always remains adjacent the side wall of the kneading vessel. Since the kneading occurs mainly in that zone of the vessel immediately adjacent the tool,and due to the effect of the different peripheral velocities of the tool and the vessel, it follows that it is thus possible to achieve a better kneading action with a consequent reduction in the time necessary for kneading.

In a preferred embodiment, the kneading tool includes a pair of arms defining a C-shape and having respective end portions facing each other, both of these portions being arcuate and being located parallel to and adjacent the side wall of the vessel.

Preferably, the two arms constituting the kneading tools lie in different planes.

Further characteristics and advantages of the present invention will emerge from the following description with reference to the appended drawings, provided purely by way of non-limiting example, in which:

Figure 1 is a perspective view of a kneading machine according to the invention;

Figure 2 is a section taken on line II-II of Figure 1, and

Figure 3 is a section taken on line III-III of Figure 2.

In the drawings, a kneading machine 1 usable particularly for making flour doughs is of the type described and illustrated in the earlier European patent application No. 81830214.3 (0 052 582) filed by the same applicants.

The kneading machine 1 includes a base 2 acting as a support structure on which a kneading vessel 3 is mounted for rotation about a central vertical axis X-X.

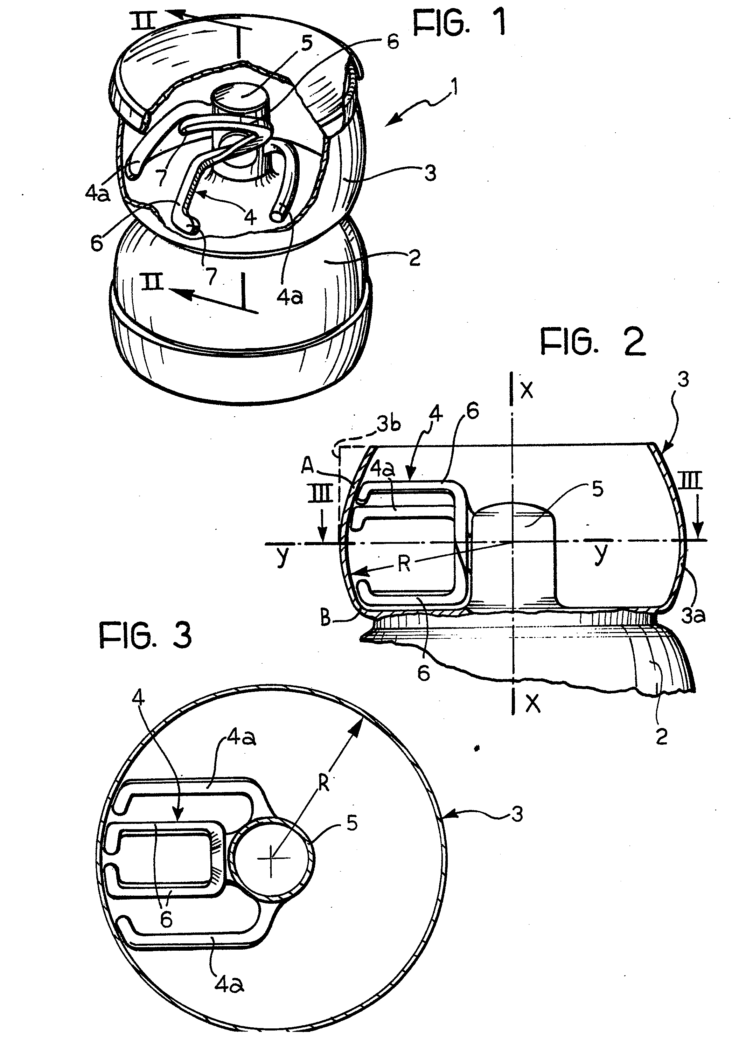

The kneading vessel 3 is circular in plan (see Figure 3).

Reference numeral 4 shows a kneading tool which is supported for rotation about a horizontal axis Y-Y within the kneading vessel 3 by a central support structure 5. The axis of rotation Y-Y of the kneading tool 4 extends radially of the vertical axis of rotation X-X of the vessel 3.

In the particular example illustrated in the drawings, the kneading tool 4 includes two arms 6 disposed in planes offset from each other, which define a C-shape and which have two curved end portions 7 turned towards each other. Reference numeral 4a indicates two fixed counter members arranged to cooperate with the tool 4 during the kneading action.

As illustrated in Figure 2, the side wall 3a of the kneading vessel 3 has , in vertical section, a profile in the form of an arc of a circle the radius of curvature R of which is the same as the radius of curvature of the vessel 3 in a horizontal section containing the axis Y-Y of the kneading tool 4 (see Figure 3).

Each arm 6 of the kneading tool 4 has a central portion parallel to the axis of rotation Y-Y, which is located at such a distance from the axis of rotation that the central portion passes immediately adjacent the bottom of the vessel 3 during the rotation of the tool (see Figure 2).

Furthermore, the end portion 7 of each arm 6 is disposed parallel to and adjacent the side wall 3a of the vessel 3 whereby, during rotation of the kneading tool, the end portions 7 always remain adjacent the side wall 3a (see Figures 2 and 3).

In Figure 2, a broken line 3b corresponds to the profile of the kneading vessel 3 of the machine proposed in the earlier European patent application mentioned above. As can be seen, even in the previously proposed machine, the central part of each arm 6 of the kneading tool passes immediately adjacent the bottom of the vessel. The end portion of each arm of the tool, however, is adjacent the wall of the vessel only when it is below the horizontal plane containing the axis of the tool.

In the machine according to the present invention, however, the end portions 7 of the two arms 6 of the kneading tool always remain adjacent the side wall 3a of the kneading vessel 3.

Since the kneading action is due to the different peripheral velocities of the tool and the vessel, and is exerted particularly in the zone in which the tool is immediately adjacent the wall of the vessel, the aforesaid characteristic allows an improvement in the kneading action to be achieved. In particular, the time necessary for the kneading is reduced and the mixing of the ingredients and the homogeneity of the kneaded mass are improved.

Obviously, it suffices for the wall of the vessel 3 to have, in vertical section, a profile in the form of an arc of a circle of radius R in the section which cooperates with the kneading tool (the ends of which are indicated A and B in Figure 2).

Naturally, the principle of the invention remaining the same, the constructional details and forms of embodiment. may be varied widely with respect to that described and illustrated purely by way of example, without thereby departing from the scope of the present invention.

Claims:

1. Kneading machine including:

a fixed support structure (2);

a kneading vessel (3) which is circular in plan and is supported for rotation about a central vertical axis (X-X) by the fixed support structure (2);

a kneading tool (4) mounted for rotation about a radial axis (Y-Y) within the kneading vessel (3), and

fixed counter members (4a) arranged to cooperate with the kneading tool,

characterised in that the side wall (3a) of the kneading vessel (3),or at least the part (A,B) which cooperates with the kneading tool(4),has,in vertical section, a profile in the form of an arc of a circle with a radius (R) equal to that radius (R) of the vessel (3) which lies in a horizontal plane containing the axis (Y-Y) of the kneading tool (4),and in that the kneading tool (4) includes at least one arm (6) having a curved end portion (7) located parallel to and adjacent the side wall (3a) of the kneading vessel (3).

2. Kneading machine according to Claim 1, characterised in that the kneading tool (4) includes a pair of arms (6) defining a C-shape with respective end portions (7) facing each other,both these end portions (7) being curved and being located parallel to and adjacent the side wall (3a) of the kneading vessel (3).

FIG. 1

FIG. 2

FIG. 3